(19) Europäisches Patentamt
European Patent Office
Office européen des brevets

(11) **EP 2 295 946 A1**

(12) **EUROPEAN PATENT APPLICATION**

(43) Date of publication:
**16.03.2011 Bulletin 2011/11**

(51) Int Cl.:
***G01L 1/24*** *(2006.01)*

(21) Application number: **09398004.3**

(22) Date of filing: **11.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Fibersensing - Sistemas Avançados de Monitorização S.A.
4470-640 Maia (PT)**

(72) Inventors:
• **Moita Araújo, Francisco Manuel
4450-296 Matosinhos (PT)**
• **Almeida Ferreira, Luís Alberto de
4400-639 Vila Nova de Gaia (PT)**

(74) Representative: **Ferreira, Maria Silvina
Clarke, Modet & Co.
Rua Castilho, 50-9°
1269-163 Lisboa (PT)**

(54) **Athermal fiber bragg grating strain gauge**

(57)   Fiber Bragg gratings are particularly suitable for measuring strain. Currently such a single parameter measurement is difficult to implement, since cross-sensitivity to temperature compels the use of an additional temperature reference - e.g., strain-inactive fiber Bragg grating. A passive athermal fiber Bragg grating strain gauge would render unnecessary the measurement of temperature. In line with this, a gauge design for fiber Bragg gratings that enables strain measurements to be performed while canceling temperature sensitivity is disclosed. The proposed design is based on a structure (2, 3) optionally composed of a single material that defines a length ratio that allows the adjustment of the temperature sensitivity of the fiber Bragg grating (1) to zero, providing athermal operation of the strain gauge. In a further embodiment, the proposed passive athermal scheme can be designed to also compensate for structural material thermal expansion, enabling load-induced strain-components to be measured.

Figure 1

EP 2 295 946 A1

## Description

### Technical Field

The present invention relates to fiber Bragg gratings suitable for measuring strain, particularly those in which the cross-sensitivity to temperature is passively canceled without the use of an additional temperature reference.

### Summary

The present invention describes an athermal fiber Bragg grating strain gauge comprising a fiber Bragg grating (1) directly or indirectly attached at its ends to the material being monitored (4), wherein said fiber Bragg grating (1) is attached at least at one of its ends to a beam (2), and through that beam (2) to the material being monitored (4), where given the thermal behavior of the fiber Bragg grating strain gauge, the thermal expansion of the beam (2), the length of the beam (2) and the distance between attachments of the fiber Bragg grating (1) are set to partially compensate, fully compensate, or enhance the thermal sensitivity of the fiber Bragg grating (1).

The present invention further describes an athermal fiber Bragg grating strain gauge **characterized in that** it comprises a fiber Bragg grating (1), said fiber Bragg grating (1) being attached at least at one of its ends to a beam (2), and through that beam (2) to an anchoring stand (3), said beam (2) being unattached to the material being monitored (4), said anchoring stand (3) being attached to the material being monitored (4), where the coefficient of thermal expansion of the beam (2), the length of the beam (2) and the distance between the anchoring stands (3) are set to partially compensate, fully compensate, or enhance the thermal sensitivity of the fiber Bragg grating (1).

Anchoring stand is to be understood as any element comprising the function of coupling, no other direct or implied restriction is meant in this context as to its function, position or condition.

A preferred embodiment of the present invention describes a fiber Bragg grating strain gauge comprising a fiber Bragg grating (1), beams (2) and anchoring stands (3), wherein that said fiber Bragg grating (1) is attached at both its ends to said beams (2), said beams (2) are not attached to the material being monitored (4), said anchoring stands (3) are attached to the material being monitored (4), wherein the length of the beams (2) and the distance between the anchoring stands (3) are set to partially compensate, fully compensate, or enhance the thermal sensitivity of the fiber Bragg grating (1).

In another preferred embodiment of the present invention, both anchoring stands (3) are connected via a frame (5) that comprises flexures to form a flexible structure that minimizes strain induced load on the anchoring stands (3).

In yet another preferred embodiment of the present invention, said frame (5) provides mechanical protection for the fiber Bragg grating (1).

In yet another preferred embodiment of the present invention, the beams (2) have equal dimensions.

In yet another preferred embodiment of the present invention, the beams (2) have different dimensions.

In an even more preferred embodiment of the present invention, said total length of the beam or beams and said distance between the anchoring stands are set so:

$$\beta_{\mathrm{T}} = -\beta_{\varepsilon}\,\varepsilon(\mathrm{T})\,/\Delta\mathrm{T},$$

where $\beta_T$ is the temperature sensitivity of the fiber Bragg grating (1), $\beta_\varepsilon$ is the strain sensitivity of the fiber Bragg grating (1), $\varepsilon(T)$ is the additional temperature strain induced by the beams (2), and $\Delta T$ is the temperature difference thus providing athermal operation.

In yet another preferred embodiment of the present invention, said total length of the beam or beams and said distance between the anchoring stands are set to additionally compensate the coefficient of thermal expansion of the material being monitored (4).

In yet another but also preferred embodiment of the present invention, said total length of the beam or beams and said distance between the anchoring stands are set so the balancing ratio BR is given by:

$$BR = \frac{L_2}{L_1} = \frac{\beta_T + \beta_\varepsilon \alpha_M}{\beta_T + \beta_\varepsilon \alpha_F}$$

where $L_1$ is the distance between the anchoring stands (3), $L_2$ is the length of the beams (2), $\beta_T$ is the temperature sensitivity of the fiber Bragg grating (1), $\beta_\varepsilon$ is the strain sensitivity of the fiber Bragg grating (1), $\alpha_M$ is the coefficient of thermal-expansion of the material being monitored (4), and $\alpha_B$ is the coefficient of thermal-expansion of the beams (2) thus providing athermal operation of the strain gauge and compensating the CTE of the material being monitored (4).

In yet another preferred embodiment of the present invention, the beams (2) and the anchoring stands (3) consist of the same material.

In yet another but also preferred embodiment of the present invention, both beams (2) and anchoring stands (3) consist of different materials.

In yet another but still preferred embodiment of the present invention, said beams (2), anchoring stands (3) and frame (5) consist of the same material.

In yet another preferred embodiment of the present invention, said beams (2), anchoring stands (3) and frame (5) consist of different materials.

**Disclosure of the Invention**

A FBG (Fiber Bragg Grating) is a periodic modulation of the refractive index of the core of a single mode optical fiber usually written by exposure to UV light. This periodic structure is characterized by a narrow reflective spectral response. The centre wavelength $\lambda_B$ of the reflection band matches the Bragg condition:

$$\lambda_B = 2n_{eff}\Lambda \, , \qquad\qquad (1)$$

where $n_{eff}$ is the effective index of the guided mode and A is the period of the index modulation. The FBG resonance wavelength will vary accordingly with temperature and/or strain changes experienced by the fiber. For a temperature change $\Delta T$, the corresponding wavelength shift is given by:

$$\Delta\lambda_B = \lambda_B \left( \frac{1}{\Lambda}\frac{\partial\Lambda}{\partial T} + \frac{1}{n}\frac{\partial n}{\partial T} \right)\Delta T = \lambda_B(\alpha + \xi)\Delta T = \lambda_B\beta_T\Delta T \, , \qquad (2)$$

where $\alpha$ is the fiber coefficient of thermal-expansion (CTE) and $\zeta$ is the fiber thermo-optic coefficient, with values of 0.55 ppm/°C and 6.7 ppm/°C, respectively.

The wavelength shift induced by a longitudinal strain variation $\varepsilon$ is given by:

$$\Delta\lambda_B = \lambda_B \left( \frac{1}{\Lambda}\frac{\partial\Lambda}{\partial\varepsilon} + \frac{1}{n}\frac{\partial n}{\partial\varepsilon} \right)\varepsilon = \lambda_B(1 - p_e)\varepsilon = \lambda_B\beta_\varepsilon\varepsilon \, , \qquad (3)$$

where $p_e$ is the photoelastic coefficient of the fiber, with value 0.22.

In the last two equations, $\beta_T$ and $\beta_\varepsilon$ are defined as the temperature and strain sensitivities of the FBG, respectively. The usual approximate values for these two coefficients on the C-band are $\beta_T = 7.25 \times 10^{-6}$ °C$^{-1}$ and $\beta_\varepsilon = 0.76 \times 10^{-6}$ $\mu\varepsilon^{-1}$.

The overall Bragg wavelength shift induced by temperature change and/or strain is then given by:

$$\frac{\Delta\lambda_B}{\lambda_B} = \beta_T\Delta T + \beta_\varepsilon\varepsilon \, . \qquad (4)$$

The proposed method for enabling strain measurements while canceling temperature sensitivity (TS) relies on subjecting the FBG to additional temperature induced strain, $\varepsilon(T)$, according to the following expression:

$$TS = \frac{\Delta\lambda_B/\lambda_B}{\Delta T} = \beta_T + \frac{\beta_\varepsilon \varepsilon(T)}{\Delta T} \ . \qquad (5)$$

This method enables not only annulled temperature sensitivity - i.e., $TS = 0$ -, but also enhanced positive temperature sensitivity - i.e., $TS > \beta_T$ -, reduced positive temperature sensitivity - i.e., $TS < \beta_T$ -, or even negative temperature sensitivity - i.e., $TS < 0$ -. In the particular case of annulled temperature sensitivity, the exact balancing between the intrinsic FBG temperature sensitivity and temperature induced strain - $\beta_T = -\beta_\varepsilon \varepsilon(T)/\Delta T$ - provides so called athermal operation of the strain gauge.

The most common method to overcome cross-sensitivity to temperature while measuring strain with FBGs relies on the use of an additional temperature reference - e.g., strain-inactive FBG [W. W. Morey, G. Meltz and J. M. Weiss, "Evaluation of a fiber Bragg grating hydrostatic pressure sensor," in Proceedings of the Eighth International Conference on Optical Fiber Sensors, Monterey, California, USA, Postdeadline Paper PD-4.4, 1992] -. Other methods, based on the use of dual wavelength FBG [M. G. Xu, J.-L. Archambault, L. Reekie and J. P. Dakin, "Discrimination between strain and temperature effects using dual/wavelength fiber grating sensors," Electronics Letters 30, pp. 1085-1087, 1994], FBG and fiber polarization-rocking filter [S. E. Kanellopoulos, V. A. Handerek and A. J. Rogers, "Simultaneous strain and temperature sensing with photo-generated in-fiber gratings," Optics Letters 20, pp. 333-335, 1995], non-sinusoidal FBG [G. P. Brady, K. Kalli, D. J. Webb, D. A. Jackson, L. Zhang and I. Bennion, "Recent developments in optical fiber sensing using fiber Bragg gratings," in Proceedings of the Fiber Optic and Laser Sensors XIV, Denver, Colorado, USA, SPIE 2839, pp. 8-19, 1994], FBG written in different diameter fiber [S. W. James, M. L. Dockney and R. P. Tatam, "Simultaneous independent temperature and strain measurement using in-fiber Bragg grating sensors," Electronics Letters 32, pp. 1133-1134, 1996], FBG and long period grating [H. Patrick, G. M. Williams, A. D. Kersey, J. R. Pedrazzani and A. M. Vengsarkar, "Hybrid fiber Bragg grating/long period fiber grating sensor for strain/temperature discrimination," Photonic Technology Letters 8, pp. 1223-1225, 1996], FBG and in-line fiber etalon [H. Singh and J. Sirkis, "Simultaneous measurement of strain and temperature using optical fiber sensors: two novel configuration" in Proceedings of the Eleventh International Conference on Optical Fiber Sensors, Hokkaido University, Sapporo, Japan, pp. 108-111, 1996], and FBG pair written in hi-bi PANDA fiber [L. A. Ferreira, F. M. Araújo, J. L. Santos and F. Farahi, "Simultaneous measurement of strain and temperature using interferometrically interrogated fiber Bragg grating sensors", Optical Engineering 39, pp. 2226-2234, 2000] have been demonstrated, but they are often too complex and difficult to implement in real world structures. Moreover, besides being not required in all the strain monitoring cases, the measurement of temperature by the referred methods implies the allocation of additional bandwidth to each sensor, therefore limiting the total number of sensors in a given sensing network. The proposed true passive athermal fiber Bragg grating strain gauge is thus of particular interest since it renders optional the measurement of temperature, benefiting large scale system design and performance. In addition, the proposed strain gauge can also be designed to further compensate for structural material thermal expansion, enabling load-induced strain-components to be discriminated from the thermal-induced strain-components.

As mentioned, the method now proposed relies on subjecting the FBG to additional temperature induced strain. The simplest method of applying temperature dependent strain to a FBG is to attach it to a material with a CTE dissimilar to that of silica. However, this restricts the adjustment of the FBG sensitivity to the set of discrete values that can be obtained employing available materials. A well-known method of attaining a broad range of effective CTEs - including negative CTE values - is to provide a structure incorporating a proper arrangement of two materials with distinct CTEs [DE3112193]. A proper design of such a structure can be used for packaging FBGs, allowing for continuous adjustment of the FBG temperature sensitivity. The particular case of athermal operation employing this concept has been the focus of several patent applications [WO 01/67142 A2, US 6393181 B1]. The implementation of athermal strain gauge packaging using two materials has also been the scope of several patent applications. Here, it is disclosed a FBG strain gauge construction that relies on a single material to attain athermal strain measurements in a considerable number of structural health monitoring applications. The disclosed design further allows the compensation for structural thermal expansion, thus enabling load-induced strain-components to be measured.

It is one of the intents of this invention to propose a design for an athermal strain gauge that enables strain measurements to be performed through a fiber Bragg grating sensor while canceling its intrinsic temperature sensitivity, thus extending the range of applications of such components. The disclosed design is based on a structure composed of a single material comprising beams and anchoring stands making an assembly that when bonded to a material being monitored allows the adjustment of the temperature sensitivity to zero, providing athermal operation of the strain gauge. The design can be made to match a particular material, involving the balancing of two lengths defined by the distance between the anchoring stands and the length of the beams. The disclosed design can be further adjusted to compensate for the thermal expansion of the material to which it is attached.

It is obvious that the exact shape of said structure is not relevant to the effect. The shape of the sensor can be made flat, cylindrical or have any other shape that enables the use of the disclosed design in different monitoring applications, such as surface mountable through adhesive bonding or welding, embedding or grouting in concrete or embedding in composite materials.

It is also possible to achieve the same effect by means of a single beam, in this case, the full length of the two beams being merged in one single structure.

**Figure Description**

Figure 1 - Design of the proposed passive athermal FBG strain gauge where (1) represents the fiber Bragg grating, (2) represents the beams with length $L_2$, (3) represents the anchoring stands at a distance $L_1$ and (4) represents the material being monitored.

Figure 2 - Design of another embodiment of the proposed passive athermal FBG strain gauge where (1) represents the fiber Bragg grating, (2) represents the beams with length $L_2$, (3) represents the anchoring stands, (4) represents the material being monitored and (5) represents the frame that mechanically connects the anchoring stands at a distance $L_1$.

Figure 3 - Athermal performance of the passive athermal FBG strain gauge compared to the temperature induced strain shift of a standard FBG strain gauge.

Figure 4 - Comparison of a strain measurement performed with the disclosed passive athermal FBG strain gauge and with a standard FBG strain gauge.

**Description of a preferred embodiment of the invention**

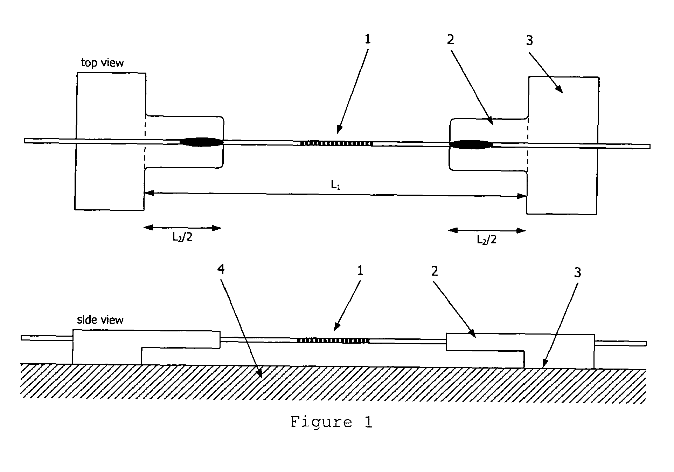

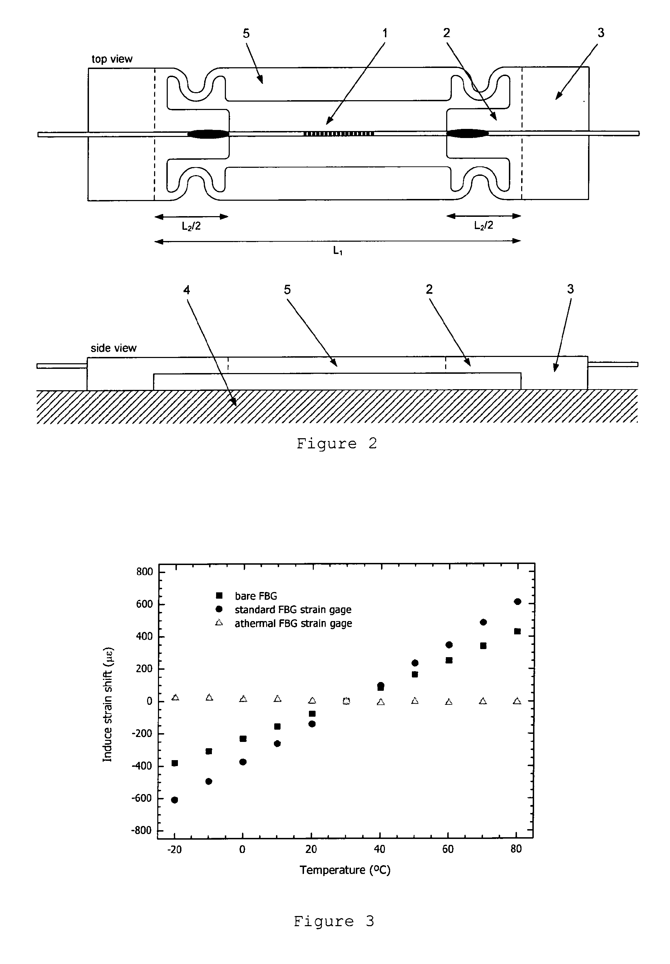

As an example, a basic structure of the proposed passive athermal FBG (1) strain gauge is shown in Figure 1 - it consists of a structure comprising beams (2) and anchoring stands (3). Each beam (2) has a length $L_2/2$ and are made of a material with CTE $\alpha_B$ not attached to the material (4) being monitored. The anchoring stands (3) are made of the same material as the beams (2) and are attached at a distance of $L_1$ to the material (4) being monitored. The fiber Bragg grating (1) is attached at its ends to the beams (2). Figure 2 presents another embodiment of the proposed design in which the anchoring stands (3) are connected through a frame (5) to form a suitable structure to define the distance $L_1$ between the anchoring stands (3) and that comprises flexures to minimize the load that is applied to the bonds between the anchoring stands (3) and the material (4) being monitored. The frame further provides suitable mechanical protection for the FBG (1) when no recoating of the pristine optical fiber is performed.

**Athermal performance**

Here it is provided an analysis of the temperature compensation performance of the athermal strain gauge design that compensates for both the FBG intrinsic temperature sensitivity and the CTE of the material being monitored. It is straightforward that the athermal design can be adjusted to compensate only for the FBG intrinsic temperature sensitivity. Consider that the athermal strain gauge is bonded to the material - e.g., composite material, concrete, steel, etc. - being monitored at the bottom surface of the anchoring stands. Under this condition, the strain gauge's "effective CTE" becomes equal to the one of the material being monitored, since the material deformation under temperature variations will be integrated by a geometrical change of the distance between the anchoring stands. In this case, and being $\alpha_B$ the CTE of the beams and $\alpha_M$ the CTE of the material being monitored, the following expression can be written for the FBG wavelength shift induced by temperature:

$$\frac{\Delta\lambda_B}{\lambda_B} = \left[\beta_T + \beta_\varepsilon\left(\frac{\alpha_M L_1 - \alpha_B L_2}{L_1 - L_2}\right)\right]\Delta T \ . \tag{6}$$

In this expression, $L_1$ and $L_2$ are the distance between the anchoring stands and the length of the beams, and $\beta_T$ and $\beta_\varepsilon$ are defined as the temperature and strain sensitivities of the FBG, respectively. The usual approximate values for these two coefficients on the C-band are $\beta_T = 7.25\text{x}10^{-6}\ °\text{C}^{-1}$ and $\beta_\varepsilon = 0.76\text{x}10^{-6}\ \mu\varepsilon^{-1}$, respectively. Minimum wavelength drift with temperature can be obtained by balancing the length of the beams to the distance between the anchoring stands, thus resulting in the following condition for the balancing ratio (*BR*)

$$BR = \frac{L_2}{L_1} = \frac{\beta_T + \beta_\varepsilon \alpha_M}{\beta_T + \beta_\varepsilon \alpha_B} \ . \tag{7}$$

From this ratio, it is straightforward to state that minimum length design is obtained for maximum value of the CTE of the beams $\alpha_B$. It should also be emphasized that this design restricts the maximum FBG length to $L_1$-$L_2$; thus for a given FBG length, it is always possible to calculate the lengths $L_1$ and $L_2$ that fulfill both conditions. Taking into account these constrains, aluminum has been selected for building the strain gauge - $\alpha_B$ = 23.5 ppm/°C -. Considering, as an example, strain measurements in a composite material with a typical CTE value of $2.5\text{x}10^{-6}\ °\text{C}^{-1}$ and the previous values given for $\beta_T$ and $\beta_\varepsilon$, equation 7 yields a ratio of 0.364, which for a distance between the anchoring stands of 40 mm results in a length of the beams of 14.6 mm. Although aluminum presents several beneficial properties for manufacturing the athermal strain gauge - e.g., high Young modulus, high CTE ratio, out of the shelf availability in a broad dimensional range, easy material processing -, other materials can be employed - e.g., zinc, stainless steel, etc. -.
Figure 3 shows the performance of the athermal FBG strain gauge compared to a standard FBG strain gauge for a temperature range compatible with most structural health monitoring applications. Data in Figure 3 also compares the strain shift of an unbonded bare FBG to the one of the standard FBG strain gauge bonded to a composite material. It is possible to observe that the standard FBG strain gauge presents additional strain shift induced by the CTE of the material. In this case, the athermal FBG strain gauge provides compensation for both the FBG thermal sensitivity and the CTE of the material.

**Strain gauge performance**

Here it is provided an analysis of the strain measurement performance of the athermal strain gauge design that compensates for both the FBG intrinsic temperature sensitivity and the CTE of the material being monitored. For a strain $\varepsilon_M$ applied to the material being monitored, the FBG will be subjected to a strain given by

$$\varepsilon_{FBG} = \varepsilon_M \frac{L_1}{L_1 - L_2} \ . \tag{8}$$

The Bragg wavelength shift associated with this strain is, therefore, given by

$$\frac{\Delta\lambda_B}{\lambda_B} = \beta_\varepsilon \frac{L_1}{L_1 - L_2} \ . \tag{9}$$

The mentioned strain will arise only from load applied to the material being monitored, since any temperature induced deformation of the material will be effectively cancelled by the athermal design.

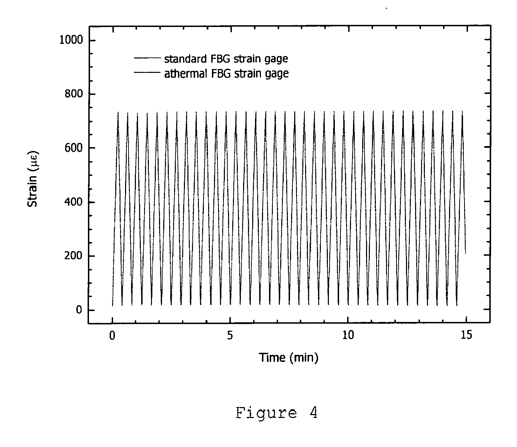

Data in Figure 4 demonstrate that once the gauge factor is set correctly, it is possible to provide very accurate strain measurements independent of temperature induced detrimental effects.

**Claims**

1. Athermal fiber Bragg grating strain gauge **characterized in that** it comprises a fiber Bragg grating (1) directly or indirectly attached at its ends to the material being monitored (4), wherein said fiber Bragg grating (1) is attached at least at one of its ends to a beam (2), and through that beam (2) to the material being monitored (4), where given the thermal behavior of the fiber Bragg grating strain gauge (1), the coefficient of thermal expansion of the beam (2), the length of the beam (2) and the distance between attachments of the fiber Bragg grating (1) are set to partially compensate, fully compensate, or enhance the thermal sensitivity of the fiber Bragg grating (1).

2. Athermal fiber Bragg grating strain gauge according to the previous claim **wherein** it comprises a fiber Bragg grating (1), said fiber Bragg grating (1) being attached at least at one of its ends to a beam (2), and through that beam (2) to an anchoring stand (3), said beam (2) being unattached to the material being monitored (4), said anchoring stand (3) being attached to the material being monitored (4), where the coefficient of thermal expansion of the beam (2), the length of the beam (2) and the distance between the anchoring stands (3) of the fiber Bragg grating (1) are set to partially compensate, fully compensate, or enhance the thermal sensitivity of the fiber Bragg grating (1).

3. Athermal fiber Bragg grating strain gauge according to the previous claim **wherein** it comprises a fiber Bragg grating (1), beams (2) and anchoring stands (3), where that said fiber Bragg grating (1) is attached at both its ends to said beams (2), said beams (2) are not attached to the material being monitored (4), said anchoring stands (3) are attached to the material being monitored (4), wherein the coefficient of thermal expansion of the beams (2), the length of the beams (2) and the distance between the anchoring stands (3) are set to partially compensate, fully compensate, or enhance the thermal sensitivity of the fiber Bragg grating (1).

4. Athermal fiber Bragg grating strain gauge according to the previous claim, **wherein** both anchoring stands (3) are connected via a frame (5) that comprises flexures to form a flexible structure that minimizes strain induced load on the anchoring stands (3).

5. Athermal fiber Bragg grating strain gauge according to the previous claim **wherein** said frame (5) provides mechanical protection for the fiber Bragg grating (1).

6. Athermal fiber Bragg grating strain gauge according to any one of the claims 3 to 5 **wherein** the beams (2) have equal dimensions.

7. Athermal fiber Bragg grating strain gauge according to any one of the claims 3 to 5 **wherein** the beams (2) have different dimensions.

8. Athermal fiber Bragg grating strain gauge according to any one of the previous claims **wherein** said total length of the beam or beams (2) and said distance between the anchoring stands (3) are set so:

$$\beta_T = -\beta_\varepsilon \, \varepsilon(T) / \Delta T,$$

where $\beta_T$ is the temperature sensitivity of the fiber Bragg grating (1), $\beta_\varepsilon$ is the strain sensitivity of the fiber Bragg grating (1), $\varepsilon(T)$ is the additional temperature induced strain by the beams (2), and $\Delta T$ is the temperature difference thus providing athermal operation.

9. Athermal fiber Bragg grating strain gauge according to any one of the previous claims **wherein** said coefficient of thermal expansion of the beam or beams, the total length of the beam or beams (2) and said distance between the anchoring stands (3) are set to additionally compensate the coefficient of thermal expansion of the material being monitored (4).

10. Athermal fiber Bragg grating strain gauge according to the previous claim **wherein** said total length of the beam or

EP 2 295 946 A1

beams (2) and said distance between the anchoring stands (3) are set so the balancing ratio BR is given by:

$$BR = \frac{L_2}{L_1} = \frac{\beta_T + \beta_\varepsilon \alpha_M}{\beta_T + \beta_\varepsilon \alpha_F}$$

where $L_1$ is the distance between the anchoring stands (3), $L_2$ is the total length of the beam or beams (2), $\beta_T$ is the temperature sensitivity of the fiber Bragg grating (1), $\beta_\varepsilon$ is the strain sensitivity of the fiber Bragg grating (1), $\alpha_M$ is the coefficient of thermal-expansion of the material being monitored (4), and $\alpha_B$ is the coefficient of thermal-expansion of the beam or beams (2) thus providing athermal operation of the strain gauge and compensating the CTE of the material being monitored.

11. Athermal fiber Bragg grating strain gauge according to any one of the claims 1 to 10, **wherein** beams (2) consist of the same material.

12. Athermal fiber Bragg grating strain gauge according to any one of the claims 1 to 10, **wherein** beams (2) consist of different materials.

13. Athermal fiber Bragg grating strain gauge according to any one of the claims 1 to 10 **wherein** the beams (2) and the anchoring stands (3) consist of the same material.

14. Athermal fiber Bragg grating strain gauge according to any one of the claims 1 to 10, **wherein** beams (2) and anchoring stands (3) consist of different materials.

15. Athermal fiber Bragg grating strain gauge according to any one of the claims 4 to 10, **wherein** said beams (2), anchoring stands (3) and frame (5) consist of the same material.

16. Athermal fiber Bragg grating strain gauge according to any one of the claims 4 to 10, **wherein** said beams (2), anchoring stands (3) and frame (5) consist of different materials.

Figure 1

Figure 2

Figure 3

Figure 4

Europäisches
Patentamt
European
Patent Office
Office européen
des brevets

# EUROPEAN SEARCH REPORT

Application Number

EP 09 39 8004

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/20377 A (SIEMENS AG [DE]; ROTHHARDT MANFRED [DE]; WILLSCH MICHAEL [DE]) 22 March 2001 (2001-03-22) * abstract * * page 11, line 23 - page 13, line 7 * * figure 4 * | 1-16 | INV. G01L1/24 |
| X | EP 1 679 497 A (FIBERSENSING SIST S AVANCADOS [PT]) 12 July 2006 (2006-07-12) * abstract * * paragraph [0004] - paragraph [0010] * * paragraph [0012] - paragraph [0015] * * figures 1,2 * | 1,8,11 | |
| X | JP 2002 286563 A (KYOWA ELECTRONIC INSTRUMENTS) 3 October 2002 (2002-10-03) * abstract * * figures 1,2 * | 1 | |
| A | JP 2003 254723 A (TOKYO ELECTRIC POWER SERV CO; KYOWA ELECTRONIC INSTRUMENTS) 10 September 2003 (2003-09-10) * abstract * * figures 2,8 * | 1-3 | TECHNICAL FIELDS SEARCHED (IPC) G01L |

The present search report has been drawn up for all claims

| Place of search | Date of completion of the search | Examiner |
|---|---|---|
| The Hague | 12 January 2010 | Hallbäck, Ann-Sofie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 39 8004

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2010

| Patent document cited in search report | | Publication date | Patent family member(s) | | Publication date |
|---|---|---|---|---|---|
| WO 0120377 | A | 22-03-2001 | CN | 1373855 A | 09-10-2002 |
| | | | DE | 19943387 A1 | 22-11-2001 |
| | | | EP | 1210626 A1 | 05-06-2002 |
| | | | JP | 2003509717 T | 11-03-2003 |
| EP 1679497 | A | 12-07-2006 | US | 2006153490 A1 | 13-07-2006 |
| JP 2002286563 | A | 03-10-2002 | NONE | | |
| JP 2003254723 | A | 10-09-2003 | JP | 3926648 B2 | 06-06-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3112193
- WO 0167142 A2

- US 6393181 B1

**Non-patent literature cited in the description**

- **W. W. Morey ; G. Meltz ; J. M. Weiss.** Evaluation of a fiber Bragg grating hydrostatic pressure sensor. *Proceedings of the Eighth International Conference on Optical Fiber Sensors,* 1992
- **M. G. Xu ; J.-L. Archambault ; L. Reekie ; J. P. Dakin.** Discrimination between strain and temperature effects using dual/wavelength fiber grating sensors. *Electronics Letters,* 1994, vol. 30, 1085-1087
- **S. E. Kanellopoulos ; V. A. Handerek ; A. J. Rogers.** Simultaneous strain and temperature sensing with photo-generated in-fiber gratings. *Optics Letters,* 1995, vol. 20, 333-335
- **G. P. Brady ; K. Kalli ; D. J. Webb ; D. A. Jackson ; L. Zhang ; I. Bennion.** Recent developments in optical fiber sensing using fiber Bragg gratings. *Proceedings of the Fiber Optic and Laser Sensors XIV,* 1994, 8-19

- **S. W. James ; M. L. Dockney ; R. P. Tatam.** Simultaneous independent temperature and strain measurement using in-fiber Bragg grating sensors. *Electronics Letters,* 1996, vol. 32, 1133-1134
- **H. Patrick ; G. M. Williams ; A. D. Kersey ; J. R. Pedrazzani ; A. M. Vengsarkar.** Hybrid fiber Bragg grating/long period fiber grating sensor for strain/temperature discrimination. *Photonic Technology Letters,* 1996, vol. 8, 1223-1225
- **H. Singh ; J. Sirkis.** Simultaneous measurement of strain and temperature using optical fiber sensors: two novel configuration. *Proceedings of the Eleventh International Conference on Optical Fiber Sensors,* 1996, 108-111
- **L. A. Ferreira ; F. M. Araújo ; J. L. Santos ; F. Farahi.** Simultaneous measurement of strain and temperature using interferometrically interrogated fiber Bragg grating sensors. *Optical Engineering,* 2000, vol. 39, 2226-2234